# EUROPÄISCHE PATENTSCHRIFT

(11) **EP 3 713 987 B1**
(45) Veröffentlichungstag und Bekanntmachung des Hinweises auf die Patenterteilung: **05.04.2023**
(21) Anmeldenummer: 18799797.8
(22) Anmeldetag: 15.11.2018
(51) Int. Cl.: C08G 63/78, C08G 63/90

(54) **KONTINUIERLICHES VERFAHREN ZUR HERSTELLUNG EINES ALIPHATISCHEN POLYESTERS**
CONTINUOUS METHOD FOR PRODUCING AN ALIPHATIC POLYESTER
PROCÉDÉ CONTINU DE PRODUCTION D'UN POLYESTER ALIPHATIQUE

(30) Priorität: 20.11.2017 EP 17202537
(43) Veröffentlichungstag der Anmeldung: 30.09.2020
(73) Patentinhaber: BASF SE, 67056 Ludwigshafen am Rhein (DE)
(72) Erfinder: LEHENMEIER, Maximilian, 67056 Ludwigshafen am Rhein (DE); EFFEN, Norbert, 67056 Ludwigshafen am Rhein (DE); SKUPIN, Gabriel, 67056 Ludwigshafen am Rhein (DE)
(74) Vertreter: BASF IP Association
(86) Internationale Anmeldenummer: PCT/EP2018/081399
(87) Internationale Veröffentlichungsnummer: WO 2019/096918

(56) Entgegenhaltungen:
- EP-A1- 0 579 988
- EP-A1- 2 623 540
- DE-A1- 10 158 312
- US-A- 3 068 206
- US-A1- 2002 052 462

## Beschreibung

Die Erfindung betrifft ein kontinuierliches Verfahren zur Herstellung eines aliphatischen Polyesters, aufgebaut aus aliphatischen Dicarbonsäuren und aliphatischen Diolen, umfassend die Stufen a) Veresterung, b) Polykondensation und gegebenenfalls c) Kettenverlängerung, dadurch gekennzeichnet, dass der Roh-Polyester während der Stufe b), in der der Polykondensator als Entgasungsanlage (B) fungiert und/oder b') nach der Polykondensation in einer zusätzlichen Entgasungsanlage (B' ), in Gegenwart von 1 bis 7 Gew.-%, bezogen auf das Gesamtgewicht des Roh-Polyesters, in den Gasraum der Entgasungsanlage B und/oder B' eingespeisten Wasser als Schleppmittel bei einem Druck von 0,01 bis 5 mbar entgast wird.

US2002/0052462 beschreibt die Herstellung von aliphatischen Polyestern aus aliphatischen Dicarbonsäuren und aliphatischen Diolen in Gegenwart eines metallhaltigen Umesterungskatalysators und eines Phosphor enthaltenden Co-Katalysators.

Aus der Literatur sind kontinuierliche Verfahren zur Herstellung von aliphatischen Polyestern wie Polybutylensuccinat (PBS), Polybutylensuccinat-coadipat (PBSA) oder Polybutylensuccinat-cosebacat (PBSSe) bekannt (s. WO-A 2009/127555 und EP-A 2228399). In diesen Schriften wird die Abreicherung von gebildetem Tetrahydrofuran und in EP-A 2228399 auch die Abreicherung an cyclischen Dimeren beschrieben. Die in diesen Schriften beschriebenen Verfahren führen jedoch nicht zu einer ausreichenden Abreicherung der cyclischen Nebenprodukte um beispielsweise eine Zulassung für den Lebensmittelkontakt nach EU 10/2011 zu erhalten.

Um eine höhere Abreicherung der aliphatischen Polyester an cyclischen Nebenprodukten zu erreichen, wurden in EP-A 2623540 ein Verfahren entwickelt, das die Nebenprodukte im Polyestergranulat in einem nachgeschalteten Reinigungsschritt durch Extraktion mit Lösungsmitteln abreichert. Der Nachteil dieses Extraktionsverfahrens ist, dass im Granulat eingeschlossene Verunreinigungen nicht abgereichert werden und es zu einer Kontamination des Polyesters mit Lösungsmitteln kommen kann. Insgesamt ist dieses Verfahren recht aufwendig und kostspielig.

Ziel der vorliegenden Erfindung war es daher, ein effizientes und prozessfähiges kontinuierliches Verfahren zur Herstellung von aliphatischen Polyestern zu finden, das die oben beschriebenen Nachteile nicht aufweist.

Überraschenderweise wurde ein kontinuierliches Verfahren zur Herstellung eines aliphatischen Polyesters, aufgebaut aus
i-a) 90 bis 100 mol %, bezogen auf die Komponenten i-a bis i-b, Bernsteinsäure;
i-b) 0 bis 10 mol %, bezogen auf die Komponenten i-a bis i-b, einer oder mehrerer C₆-C₂₀ Dicarbonsäuren und insbesondere bevorzugt Adipinsäure, Azelainsäure, Sebazinsäure oder Brassylsäure;
i-c) 99 bis 100 mol %, bezogen auf die Komponenten i-a bis i-b, 1,3 Propandiol oder insbesondere bevorzugt 1,4-Butandiol;
i-d) 0 bis 1 Gew.- %, bezogen auf die Komponenten i-a bis i-c eines Kettenverlängerers und/oder Verzweigers;
gefunden, umfassend die Stufen a) Veresterung, b) Polykondensation und gegebenenfalls c) Kettenverlängerung, dadurch gekennzeichnet, dass der Roh-Polyester während der Stufe b), in der der Polykondensator als Entgasungsanlage (B) fungiert und/oder b') nach der Polykondensation in einer zusätzlichen Entgasungsanlage (B' ), in Gegenwart von 1 bis 7 Gew.-%, bezogen auf das Gesamtgewicht des Roh-Polyesters, in den Gasraum der Entgasungsanlage B und/oder B' eingespeisten Wasser als Schleppmittel bei einem Druck von 0,01 bis 5 mbar entgast wird.

Die Erfindung wird im Folgenden näher beschrieben.

Die aliphatischen Polyester werden beisielsweise - wie in WO-A 2009/127555 und EP-A 2228399 beschrieben - umfassend die Stufen a) Veresterung, b) Polykondensation und gegebenenfalls c) Kettenverlängerung hergestellt.

Hierbei wird in einer Vorstufe eine Mischung aus den aliphatischen Dyhydroxyverbindungen, den aliphatischen Dicarbonsäuren, vorzugsweise ohne Zugabe eines Katalysators, zu einer Paste oder Aufschlämmung vermischt und vorzugsweise auf eine Temperatur von 20 bis 90 °C gebracht oder alternativ die flüssige Mischung aus Ester der Dicarbonsäuren und Dihydroxyverbindung, vorzugsweise ohne Zugabe eines Katalysators, in einen Reaktor zur Veresterung (Vorkondensation) kontinuierlich eingespeist und
a) mit der Gesamtmenge oder einer Teilmenge des Katalysators kontinuierlich verestert bzw. umgeestert und bis zu einer Viskositätszahl nach DIN 53728 von vorzugsweise 20 bis 70 cm³/g vorkondensiert;
b) das aus a) erhältliche Produkt in einem Polykondensator B bis zu einer Viskositätszahl nach DIN 53728 von vorzugsweise 60 bis 170 cm³/g polykondensiert und gegebenenfalls dieses polykondensierte Produkt in einer Entgasungsanlage B' entgast;
   und gegebenenfalls
c) in einer weiteren Stufe kontinuierlich das aus b) oder b') erhältliche Produkt bis zu einer Viskositätszahl nach DIN 53728 von vorzugsweise 150 bis 320 cm³/g mit einem Kettenverlängerer C umgesetzt;
wobei der Roh-Polyester in Stufe b) im Polykondensator B oder nach Stufe b) in einer dafür geeigneten Entgasungsanlage B' in Gegenwart von 1 bis 7 Gew.-%, bezogen auf das Gesamtgewicht des Roh-Polyesters, eines Schleppmittels bei einem Druck von 0,01 bis 5 mbar entgast wird.

Unter aliphatischen Polyestern werden solche Polyester verstanden, die überwiegend aus den Monomeren aliphatische Dicarbonsäuren und aliphatische Diole aufgebaut sind.

Als aliphatische Dicarbonäuren oder deren esterbildende Derivate kommen im Allgemeinen solche mit 2 bis 40 Kohlenstoffatomen, vorzugsweise 4 bis 14 Kohlenstoffatomen, in Betracht. Sie können vorzugsweise linear als auch verzweigt sein. Die im Rahmen der vorliegenden Erfindung verwendbaren cycloaliphatischen Dicarbonsäuren sind in der Regel solche mit 7 bis 10 Kohlenstoffatomen und insbesondere solche mit 8 Kohlenstoffatomen. Prinzipiell können jedoch auch Dicarbonsäuren mit einer größeren Anzahl an Kohlenstoffatomen, beispielsweise mit bis zu 30 Kohlenstoffatomen, eingesetzt werden.

Beispielhaft zu nennen sind: Malonsäure, Bernsteinsäure, Glutarsäure, 2-Methylglutarsäure, 3-Methylglutarsäure, Adipinsäure, Pimelinsäure, Korksäure, Azelainsäure, Sebacinsäure, Undecandisäure, Dodecandisäure, Brassylsäure, Tetradecandisäure, Fumarsäure, 2,2-Dimethylglutarsäure, Suberinsäure, Dimerfettsäure (wie z.B. Empol^{®} 1061 der Fa. BASF SE) 1,3-Cyclopentandicarbonsäure, 1,4-Cyclohexandicarbonsäure, 1,3-Cyclohexandicarbonsäure, Diglykolsäure, Itaconsäure, Maleinsäure, Maleinsäureanhydrid und 2,5-Norbornandicarbonsäure.

Als esterbildende Derivate der oben genannten aliphatischen oder cycloaliphatischen Dicarbonsäuren, die ebenso verwendbar sind, sind insbesondere die Di-C₁- bis C₆-Alkylester, wie Dimethyl-, Diethyl-, Di-n-propyl, Di-isopropyl, Di-n-butyl, Di-iso-butyl, Di-t-butyl, Di-n-pentyl-, Di-iso-pentyl oder Di-n-hexylester zu nennen. Anhydride der Dicarbonsäuren können ebenfalls eingesetzt werden.

Dabei können die Dicarbonsäuren oder deren esterbildenden Derivate, einzeln oder als Gemisch aus zwei oder mehr davon eingesetzt werden.

Bevorzugt werden Bernsteinsäure, Adipinsäure, Azelainsäure, Sebacinsaüre, Brassylsäure oder deren jeweilige esterbildenden Derivate oder Mischungen davon eingesetzt. Besonders bevorzugt wird Bernsteinsäure, Adipinsäure oder Sebacinsäure oder deren jeweilige esterbildenden Derivate oder Mischungen davon eingesetzt. Besonders bevorzugt wird Bernsteinsäure oder Gemische von Bernsteinsäure mit bis 10 mol% Sebazinsäure oder deren esterbildende Derivate, wie deren Alkylester eingesetzt.

Bernsteinsäure, Azelainsäure, Sebacinsäure und Brassylsäure haben zudem den Vorteil, dass sie als nachwachsende Rohstoffe zugänglich sind.

Im Allgemeinen werden unter aliphatischen Diolen verzweigte oder vorzugsweise lineare Alkandiolen mit 2 bis 12 Kohlenstoffatomen, bevorzugt 3 bis 6 Kohlenstoffatomen verstanden.

Beispiele geeigneter Alkandiole sind Ethylenglykol, 1,2-Propandiol, 1,3-Propandiol, 1,2-Butandiol, 1,4-Butandiol, 1,5-Pentandiol, 1,6-Hexandiol, 2,4-Dimethyl-2-ethylhexan-1,3-diol, 2,2-Dimethyl- 1,3-propandiol, 2-Ethyl-2-butyl-1,3-propandiol, 2-Ethyl-2-isobutyl- 1,3-propandiol, 2,2,4-Trimethyl-1,6-hexandiol, insbesondere Ethylenglykol, 1,3-Propandiol, 1,4-Butandiol und 2,2-Dimethyl- 1,3-propandiol (Neopentylglykol); Cyclopentandiol, 1,4-Cyclohexandiol, 1,2-Cyclohexandimethanol, 1,3-Cyclohexandi-methanol, 1,4-Cyclohexandimethanol oder 2,2,4,4-Tetramethyl-1,3-cyclobutandiol. Erfindungsgemäß werden 1,3-Propandiol oder besonders bevorzugt 1,4-Butandiol eingesetzt. Es können auch Mischungen unterschiedlicher Alkandiole verwendet werden.

In der Regel wird in den Verfahrensstufen: Vorstufe und Veresterung a) ein Verhältnis von Komponente Diol zu Dicarbonsäure von 1,0 bis 2,5 und vorzugsweise 1,2 bis 2,2 eingestellt.

Weiterhin können die aliphatischen Polyester einen mindestens drei funktionelle Gruppen enthaltenden Verzweiger enthalten. Besonders bevorzugte Verzweiger haben drei bis sechs Hydroxylgruppen oder Carbonsäuregruppen. Beispielhaft seien genannt: Weinsäure, Zitronensäure, Äpfelsäure; Trimethylolpropan, Trimethylolethan; Pentaerythrit; Polyethertriole und Glycerin, Trimesinsäure, Trimellitsäure, Trimellitsäureanhydrid, Pyromellitsäure und Pyromellitsäuredianhydrid. Bevorzugt sind Polyole wie Trimethylolpropan, Pentaerythrit und insbesondere Glycerin. Mittels der Verzweiger lassen sich biologisch abbaubare Polyester mit einer strukturellen Viskosität aufbauen. Das rheologische Verhalten der Schmelzen verbessert sich; die Polyester lassen sich leichter verarbeiten, beispielsweise besser durch Schmelzeverfestigung zu Folien ausziehen. Die Verzweiger wirken scherentzähend, d.h. die Viskosität unter Belastung wird geringer.

Die Verzweiger werden vorzugsweise in Mengen von 0,01 bis 1, bevorzugt 0,05 bis 1, besonders bevorzugt 0,08 bis 0,20 Gew.-%, bezogen auf die Polymermenge nach Stufe a) eingesetzt.

Der Einsatz von Kettenverlängerern C ist optional und erfolgt üblicherweise am Ende der Polykondensation in einem separaten Schritt c).

Als Komponente C1 können ein Isocyanat oder eine Mischung unterschiedlicher Isocyanate eingesetzt werden. Es können aromatische oder aliphatische Diisocyanate eingesetzt werden. Es können aber auch höher funktionelle Isocyanate verwendet werden.

Unter einem aromatischen Diisocyanat C1 werden im Rahmen der vorliegenden Erfindung vor allem Toluylen-2,4-diisocyanat, Toluylen-2,6-diisocyanat, 2,2'-Diphenylmethandiisocyanat, 2,4'-Diphenylmethandiisocyanat, 4,4'-Diphenylmethan-diisocyanat, Naphthylen-1,5-diisocyanat oder Xylylen-diisocyanat verstanden.

Darunter werden 2,2'-, 2,4'- sowie 4,4'-Diphenylmethandiisocyanat als Komponente C1 besonders bevorzugt. Im Allgemeinen werden letztere Diisocyanate als Mischung eingesetzt.

Als dreikerniges Isocyanat C1 kommt auch Tri(4-isocyanophenyl)methan in Betracht. Die mehrkernigen aromatischen Diisocyanate fallen beispielsweise bei der Herstellung von ein- oder zweikernigen Diisocyanaten an.

In untergeordneten Mengen, z.B. bis zu 5 Gew.-%, bezogen auf das Gesamtgewicht der Komponente C, kann die Komponente C auch Urethiongruppen, beispielsweise zum Verkappen der Isocyanatgruppen, enthalten.

Unter einem aliphatischen Diisocyanat C1 werden im Rahmen der vorliegenden Erfindung vor allem lineare oder verzweigte Alkylendiisocyanate oder Cycloalkylendiisocyanate mit 2 bis 20 Kohlenstoffatomen, bevorzugt 3 bis 12 Kohlenstoffatomen, z.B. 1,6-Hexamethylendiisocyanat, Isophorondiisocyanat oder Methylen-bis(4-isocyanatocyclo-hexan), verstanden. Besonders bevorzugte aliphatische Diisocyanate C sind Isophorondiisocyanat und insbesondere 1,6-Hexa-methylendiisocyanat.

Zu den bevorzugten Isocyanuraten C1 zählen die aliphatischen Isocyanurate, die sich von Alkylendiisocyanaten oder Cycloalkylendiisocyanaten mit 2 bis 20 Kohlenstoffatomen, bevorzugt 3 bis 12 Kohlenstoffatomen, z.B. Isophorondiisocyanat oder Methylen-bis(4-isocyanatocyclohexan), ableiten. Dabei können die Alkylendiisocyanate sowohl linear als auch verzweigt sein. Besonders bevorzugt werden Isocyanurate, die auf n-Hexa-methylendiisocyanat basieren, beispielsweise cyclische Trimere, Pentamere oder höhere Oligomere des 1,6-Hexamethylendiisocyanats.

Als di- oder oligofunktionellen Peroxide (Komponente C2) sind beispielsweise die folgenden Verbindungen geeignet: Benzoylperoxid, 1,1-Bis(t.-butylperoxy)-3,3,5-trimethylcyclohexan, 1,1-Bis(t.-butylperoxy)methylcyclododecan, n-Butyl-4,4-bis(butylperoxy)valerat, Dicumylperoxid, t.-Butylperoxybenzoat, Dibutylperoxid, α,α-Bis(t.-butylperoxy)diisopropylbenzol, 2,5-Dimethyl-2,5-di(t.-butylperoxy)hexan, 2,5-Dimethyl-2,5-di(t.-butylperoxy)hexin-3 und t.-Butylperoxycumen.

Die Komponente C2 wird in 0,01 bis 1 Gew.-%, bevorzugt in 0,1 bis 1 Gew.-%, und besonders bevorzugt in 0,2 bis 1 Gew.-%, bezogen auf daden Polyester eingesetzt.

Als Komponente C3 kommen difunktionelle oder oligofunktionelle Epoxide in Frage wie: Hydrochinon, Diglycidylether, Resorcindiglycidylether, 1,6-Hexandiol-diglycidylether und hydrierter Bisphenol-A-Diglycidylether. Andere Beispiele von Epoxiden umfassen Diglycidylterephthalat, Diglycidyltetrahydrophthalat, Diglycidylhexahydrophthalat, Dimethyldiglycidylphthalat, Phenylendiglycidylether, Ethylendiglycidylether, Trimethylendiglycidylether, Tetramethylendiglycidylether, Hexamethylendiglycidylether, Sorbitoldiglycidylether, Polyglycerin-polyglycidylether, Pentaerythrit-polyglycidylether, Diglycerin-polyglycidylether, Glycerin-polyglycidylether, Trimethylolpropanpolyglycidylether, Resorcin-diglycidylether, Neopentylglycol-diglycidylether, Ethylenglycol-diglycidylether, Diethylenglycol-diglycidylether, Polyethylenglycol-diglycidylether, Propylenglycoldiglycidylether, Dipropylenglycol-diglycidylether, Polypropylenglycol-diglycidylether und Polybutylenglycol-diglycidylether.

Als Komponente C3a ist insbesondere geeignet ein Epoxidgruppen-haltiges Copolymer auf Basis Styrol, Acrylsäureester und/oder Methacrylsäureester d3a. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) Mwder Polymere beträgt vorzugsweise 2000 bis 25.000, insbesondere 3000 bis 8.000. Das mittlere Molekulargewicht (Zahlenmittel) Mₙ der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl^{®} ADR vertrieben. Als Kettenverlängerer besonders geeignet ist Joncryl^{®}ADR 4368.

Die Komponente C3 wird in 0,01 bis 1 Gew.-%, bevorzugt in 0,1 bis 1 Gew.-%, und besonders bevorzugt in 0,2 bis 1 Gew.-%, bezogen auf den Polyester eingesetzt.

Als Komponente C4 kommen di- oder oligofunktionelle Oxazoline, Oxazine, Caprolactame und/oder Carbodiimide in Betracht.

Bisoxazoline sind im Allgemeinen erhältlich durch das Verfahren aus Angew. Chem. Int. Ed., Vol. 11 (1972), S. 287-288. Besonders bevorzugte Bisoxazoline und Bisoxazine sind solche, in denen das Brückenglied eine Einfachbindung, eine (CH₂)_{z}-Alkylengruppe, mit z = 2,3 oder 4 wie Methylen, Ethan-1,2-diyl, Propan-1,3-diyl, Propan-1,2-diyl, oder eine Phenylengruppe bedeutet. Als besonders bevorzugte Bisoxazoline seien 2,2'-Bis(2-oxazolin), Bis(2-oxazolinyl)methan, 1,2-Bis(2-oxazolinyl)ethan, 1,3-Bis(2-oxazolinyl)propan oder 1,4-Bis(2-oxazolinyl)butan, insbesondere 1,4-Bis(2-oxazolinyl)benzol, 1,2-Bis(2-oxazolinyl)benzol oder 1,3-Bis(2-oxazolinyl)benzol genannt. Weitere Beispiele sind: 2,2'-Bis(2-oxazolin, 2,2'-Bis(4-methyl-2-oxazolin), 2,2'-Bis(4,4'-dimethyl-2-oxazolin), 2,2'-Bis(4-ethyl-2-oxazolin), 2,2'Bbis(4,4'-diethyl-2-oxazolin), 2,2'-Bis(4-propyl-2-oxazolin), 2,2'-Bis(4-butyl-2-oxazolin), 2,2'-Bis(4-hexyl-2-oxazolin), 2,2'-Bis(4-phenyl-2-oxazolin), 2,2'-Bis(4-cyclohexyl-2-oxazolin), 2,2'-Bis(4-benzyl-2-oxazolin), 2,2'-p-Phenylen-bis(4-methyl-2-oxazolin), 2,2'-p-Phenylen-bis(4,4'dimethyl-2-oxazolin), 2,2'-m-Phenylen-bis(4-methyl-2-oxazolin), 2,2'-m-Phenylen-bis(4,4'-dimethyl-2-oxazolin), 2,2'-Hexamethylen-bis(2-oxazolin), 2,2'-Octamethylen-bis(2-oxazolin), 2,2'-Decamethylen-bis(2-oxazolin), 2,2'-Ethylenbis(4-methyl-2-oxazolin), 2,2'-Tetramethylen-bis(4,4'dimethyl-2-oxazolin), 2,2'-9,9'-Diphenoxyethan-bis(2-oxazolin), 2,2'-Cyclohexylen-bis(2-oxazolin) und 2,2'-Diphenylen-bis(2-oxazolin).

Bevorzugte Bisoxazine sind 2,2'-Bis(2-oxazin), Bis(2-oxazinyl)methan, 1,2-Bis(2-oxazinyl)ethan, 1,3-Bis(2-oxazinyl)propan oder 1,4-Bis(2-oxazinyl)butan, insbesondere 1,4-Bis(2-oxazinyl)benzol, 1,2-Bis(2-oxazinyl)benzol oder 1,3-Bis(2-oxazinyl)benzol.

Carbodiimide und polymere Carbodiimide werden beispielsweise von der Fa. Lanxxess unter dem Markennamen Stabaxol^{®} vertrieben.

Beispiele sind: N,N'-Di-2,6-diisopropylphenylcarbodiimid, N,N'-Di-o-tolylcarbodiimid, N,N'-Diphenylcarbodiimid, N,N'-Dioctyldecylcarbodiimid, N,N'-Di-2,6-dimethylphenylcarbodiimid, N-tolyl-N'-Cyclohexylcarbodiimid, N,N'-Di-2,6-di-tert.-butylphenylcarbodiimid, N-Tolyl-N'-phenylcarbodiimid, N,N'-di-p-nitrophenylcarbodiimid, N,N'-Di-p-aminophenylcarbodiimid, N,N'-Di-p-hydroxyphenylcarbodiimid, N,N'-Di-cyclohexylcarbodiimid, N,N'-Di-p-tolylcarbodiimid, p-Phenylen-bisdi-o-tolylcarbodiimid, p-Phenylen-bis-dicyclohexylcarbodiimid, Hexamethylen-bis-dicyclohexylcarbodiimid, 4,4'-Dicyclohexylmethancarbodiimid, Ethylen-bis-diphenylcarbodiimid, N,N'-Benzylcarbodiimid, N-Octadecyl-N'-phenylcarbodiimid, N-Benzyl-N'-phenylcarbodiimid, N-Octadecyl-N'-tolylcarbodiimid, N-Cyclohexyl-N'-tolylcarbodiimid, N-Phenyl-N'-tolylcarbodiimid, N-Benzyl-N'-tolylcarbodiimid, N,N'-Di-o-ethylphenylcarbodiimid, N,N'-Di-p-ethylphenylcarbodiimid, N,N'-Di-o-isopropylphenylcarbodiimid, N,N'-Di-p-isopropylphenylcarbodiimid, N,N'-Dio-isobutylphenylcarbodiimid, N,N'-Di-p-isobutylphenylcarbodiimid, N,N'-Di-2,6-diethylphenylcarbodiimid, N,N'-Di-2-ethyl-6-isopropylphenylcarbodiimid, N,N'-Di-2-isobutyl-6-isopropylphenylcarbodiimid, N,N'-Di-2,4,6-trimethylphenylcarbodiimid, N,N'-Di-2,4,6-triisopropylphenylcarbodiimid, N,N'-Di-2,4,6-triisobutylphenylcarbodiimid, Diisopropylcarbodiimid, Dimethylcarbodiimid, Diisobutylcarbodiimid, Dioctylcarbodiimid, t-Butylisopropylcarbodiimid, Di-β-naphthylcarbodiimid und Di-t-butylcarbodiimid.

Die Komponente C4 wird in 0,01 bis 1 Gew.-%, bevorzugt in 0,1 bis 1 Gew.-%, und besonders bevorzugt in 0,2 bis 1 Gew.-%, bezogen auf den Polyester eingesetzt.

Die aliphatische Polyester i enthalten erfindungsgemäß die folgenden Komponenten:
i-a) 90 bis 100 mol %, bezogen auf die Komponenten i-a bis i-b, Bernsteinsäure;
i-b) 0 bis 10 mol %, bezogen auf die Komponenten i-a bis i-b, einer oder mehrerer C₆-C₂₀ Dicarbonsäuren und insbesondere bevorzugt Adipinsäure, Azelainsäure, Sebazinsäure oder Brassylsäure;
i-c) 99 bis 100 mol %, bezogen auf die Komponenten i-a bis i-b, 1,3 Propandiol oder insbesondere bevorzugt 1,4-Butandiol;
i-d) 0 bis 1 Gew.- %, bezogen auf die Komponenten i-a bis i-c eines Kettenverlängerers und/oder Verzweigers.

Das erfindungsgemäße Verfahren eignet sich insbesondere zur Herstellung der aliphatischen Polyester: Polybutylenadipat (PBA), Polybutylensuccinatadipat (PBSA), Polybutylensuccinatsebacat (PBSSe), Polybutylensebacat (PBSe) und besonders bevorzugt Polybutylensuccinat (PBS). Die aliphatischen Polyester werden beispielsweise von den Firmen Showa Highpolymers unter dem Namen Bionolle und von Mitsubishi unter dem Namen GS Pla vermarktet.

Die mit dem erfindungsgemäßen Verfahren hergestellten aliphatischen Polyester weisen in der Regel Viskositätszahlen nach DIN 53728 von 150 bis 320 cm³/g und vorzugsweise 150 bis 250 cm³/g auf.

Der MVR (Schmelzvolumenrate) nach EN ISO 1133 (190°C, 2,16 kg Gewicht) liegt im Allgemeinen vor Kettenverlängerung bei 0,1 bis 150, bevorzugt bei 10 bis 150 cm³/10 min.

Die Säurezahlen nach DIN EN 12634 liegen im Allgemeinen bei 0,01 bis 1,2 mg KOH/g, vorzugsweise bei 0,1 bis 1,0 mg KOH/g und insbesondere bevorzugt bei 0,1 bis 0,7 mg KOH/g.

Die genannten aliphatischen und teilaromatischen Polyester und die erfindungsgemäßen Polyestermischungen sind biologisch abbaubar.

Im Sinne der vorliegenden Erfindung ist das Merkmal "biologisch abbaubar" für einen Stoff oder ein Stoffgemisch dann erfüllt, wenn dieser Stoff oder das Stoffgemisch entsprechend DIN EN 13432 einen prozentualen Grad des biologischen Abbaus von mindestens 90% aufweist.

Im Allgemeinen führt die biologische Abbaubarkeit dazu, dass die Polyester(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 CO₂-freie Luft durch gereiften Kompost während des Kompostierens strömen gelassen und dieser einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400 beschrieben.

Die EU Verordnung 10/2011 legt Grenzwerte für Kunststoffmaterialien fest, die mit Nahrungsmitteln in Berührung stehen. Verpackungsmaterialien aus nicht aufgereinigten aliphatischen Polyestern wie Polybutylensuccinat (PBS) erfüllen die Auflagen dieser Norm nicht und kommen für Lebensmittelanwendungen daher nicht in Frage. Insbesondere die cyclischen Verunreinigungen im Polyester wie THF, cyclische Monomere, Dimere, Trimere und Tetramere können unter den verschiedenen Testbedingungen aus dem Verpackungsmaterial migrieren. Das erfindungsgemäße Verfahren liefert nunmehr aliphatische Polyester, die an cyclischen Verunreinigungen deutlich abgereichert sind und die in der EU Verordnung 10/2011 geforderten Grenzwerte erfüllen. Dabei hat sich das erfindungsgemäße Verfahren als effizienter als die in EP-A 228399 und EP-A 2623540 beschriebenen Verfahren erwiesen.

Im Folgenden wird das erfindungsgemäße Verfahren näher beschrieben.

In einer Vorstufe werden die zuvor beschriebenen Dicarbonsäuren und Diole und gegebenenfalls Dihydroxyverbindung und Hydroxycarbonsäure gemischt. In der Regel werden 1,0 mol-Äquivalente einer Mischung aus aliphatischen Dicarbonsäuren oder deren Ester, 1,1 bis 1,5, vorzugsweise 1,2 bis 1,4 mol-Äquivalente aliphatischen Dyhydroxyverbindungen vorgemischt.

In einer bevorzugten Verfahrensweise werden die Dicarbonsäuren als freie Säuren eingesetzt. Hierbei wird die Mischung in den obengenannten Mischungsverhältnissen - ohne Zugabe eines Katalysators - zu einer üblicherweise auf 20 - 90°C temperierten Paste vermischt.

Alternativ hierzu werden die flüssigen Ester der Dicarbonsäuren (Komponente A) und die Dihydroxyverbindung und gegebenenfalls weiteren Comonomeren, in den obengenannten Mischungsverhältnissen - ohne Zugabe eines Katalysators - in der Regel bei einer Temperatur von 40 - 200°C vermischt.

In einer weiteren Alternative wird eine oder mehrere Dicarbonsäuren mit dem aliphatischen Diol zu einem oligomeren Polyester eine Viskosität von 5 bis 15 cm³/10 min verestert und in die Vorstufe eingesetzt.

In Stufe a) wird die zuvor beschriebene Paste, Aufschlämmung und/oder Flüssigkeit (Vorstufe) aus aliphatischen Dicarbonsäuren, einem aliphatischen Diol und gegebenenfalls weiteren Comonomeren in Gegenwart von 0,001 bis 1 Gew.-%, vorzugsweise 0,03 bis 0,2 bezogen auf Polymermenge nach Stufe b, eines Katalysators verestert.

Die überschüssige Diolkomponente wird in der Regel abdestilliert und nach beispielsweise destillativer Aufreinigung wieder dem Kreislauf zugeführt.

In Stufe a) wird entweder die Gesamtmenge oder eine Teilmenge - vorzugsweise 50 bis 80 Teile des Katalysators zudosiert. Als Katalysatoren werden üblicherweise Zink-, Aluminium und insbesondere Titan-Verbindungen eingesetzt. Titan-Katalysatoren wie Tetrabutylorthotitanat oder Tetra(iso-propyl)orthotitanat haben gegenüber den in der Literatur häufig verwendeten Zinn, Antimon, Kobalt und Blei-Verbindungen wie Zinn-dioctanat zudem den Vorteil, dass im Produkt verbleibende Restmengen des Katalysators oder Folgeprodukte des Katalysators weniger toxisch sind. Dieser Umstand ist bei den biologisch abbaubaren Polyestern besonders wichtig, da sie beispielsweise als Kompostierbeutel oder Mulchfolien unmittelbar in die Umwelt gelangen.

Gleichzeitig werden in Stufe a) eine Temperatur von 180 und 260 °C und vorzugsweise 220 bis 250°C sowie ein Druck von 0,6 bis 1,2 bar und vorzugsweise 0,8 bis 1,1 bar eingestellt. Die Stufe a) kann in einem Mischaggregat wie beispielsweise einem Hydrocylon durchgeführt werden. Typische Verweilzeiten liegen bei 1 bis 2 Stunden.

Vorteilhaft wird Stufe a) (Veresterung und Vorkondensation) in einem einzigen Reaktor wie beispielsweise einem Turmreaktor durchgeführt (siehe beispielsweise WO 03/042278 und DE-A 199 29 790), wobei der Reaktor die für die jeweilige Stufe geeigneten Einbauten aufweist.

Für die Vorkondensation haben sich Reaktoren wie ein Rohrbündelreaktor, eine Kesselkaskade oder eine Blasensäule und insbesondere eine Fallstromkaskade gegebenenfalls mit Entgasungseinheit als geeignet erwiesen. In der Regel werden Reaktionstemperaturen von 230 bis 270 °C, vorzugsweise 240 bis 260 °C und Drucke zu Beginn der Stufe a) von 0,1 bis 0,5, vorzugsweise 0,2 bis 0,4 bar und am Ende der Stufe a) von 5 bis 100 mbar, vorzugsweise 5 bis 20 mbar eingestellt. Es lassen sich bei Verweilzeiten von 60 bis 160 Minuten aliphatische Präpolyester mit einer Viskositätszahl nach DIN 53728 von 20 bis 70 und vorzugsweise 25 bis 55 cm³/g herstellen. In der Regel liegen die Säurezahlen nach DIN EN 12634 am Ende der Stufe a) bei 0,7 bis 2 mg KOH/g.

Als besonders vorteilhaft für die Vorkondensation a) haben sich die in WO-A 03/042278 und WO-A 05/042615 detailliert beschriebenen Turmreaktoren erwiesen, bei denen der Produktstrom im Gleichstrom über einen ein- oder mehrstufigen Fallfilmverdampfer geführt wird, wobei die Reaktionsdämpfe - insbesondere Wasser, THF und bei Einsatz von Dicarbonsäureestern Alkohole - an mehreren Stellen über den Reaktor verteilt abgezogen werden. Auf die in WO-A 03/042278 und WO-A 05/042615 beschriebene Gleichstromfahrweise mit einer kontinuierlichen - mindestens an mehreren Stellen erfolgenden - Abführung der Reaktionsdämpfe wird hier ausdrücklich Bezug genommen.

Die Reaktionsbrüden, die im wesentlichen aus Wasser und bei Einsatz von Dicarbonsäureestern aus Alkohol, aus überschüssigem Diol und Nebenprodukt THF - bei Einsatz des Diols 1,4-Butandiol - bestehen, werden nach üblichen Verfahren destillativ aufgereinigt und in den Prozess wieder zurückgefahren.

Im Polykondensationsschritt b) wird der vorkondensierte Polyester gegebenenfalls mit einem Deaktivator für den Katalysator versetzt. Als Deaktivatoren kommen insbesondere PhosphorVerbindungen entweder Organophosphite wie phosphonige Säure oder phosphorige Säure oder anorganische Phosphite wie Natriumphosphit oder Natriumhypophosphit in Betracht. Der Einsatz von Deaktivatoren ist besonders ratsam, wenn hochreaktive Titankatalysatoren eingesetzt werden. Die Deaktivatoren können in einer Menge von 0,001 bis 0,1 Gew.-%, vorzugsweise 0,01 bis 0,05 Gew.-% bezogen auf die Polymermenge nach Stufe b), zugesetzt werden. Vorzugsweise wird ein Ti/P Verhältnis von 1,3-1,5 : 1 und insbesondere bevorzugt 1,1-1,3 : 1 eingestellt.

Die Polykondensation erfolgt in einem sogenannten Finisher. Als Finisher haben sich insbesondere Reaktoren wie ein Ringscheibenreaktor oder ein Käfigreaktor wie sie in der US 5779986 und EP 719582 beschrieben sind als geeignet erwiesen. Insbesondere letzterer trägt der mit zunehmender Reaktionsdauer zunehmende Viskosität des Polyesters Rechnung. In der Regel werden Reaktionstemperaturen von 220 bis 270°C, vorzugsweise 230 bis 250°C und Drucke von 0,1 bis 5 mbar, vorzugsweise 0,5 bis 5 mbar eingestellt. Es lassen sich bei Verweilzeiten von 30 bis 90 Minuten, vorzugsweise 40 bis 80 Minuten aliphatische Polyester mit einer Viskositätszahl nach DIN 53728 von 70 bis 130 cm³/g und Säurezahlen nach DIN EN 12634 von 0,5 bis 1,2 vorzugsweise 0,6 bis 0,9 mg KOH/g herstellen. Um die mittlere Verweilzeit der Polymerschmelze zu begrenzen, kann die Förderung der Schmelze durch den Finisher durch beispielsweise eine höhere Drehzahl der Scheibe oder des Käfigs eingestellt werden. Typische Molekulargewichte (Mn) liegen bei 10000 bis 25000, Molekulargewichte (Mw) bei 35000 bis 70000 bei dieser Stufe.

In einer bevorzugten Ausführungsform des erfindungsgemäßen Verfahrens wird ein wie oben beschriebener Finisher (ein Ringscheibenreaktor oder ein Käfigreaktor) mit einer Einrichtung versehen, die die Einspeisung des Schleppmittels in den Gasraum des Finishers ermöglicht.

Als Schleppmittel geeignet ist Wasser, das in den Gasraum des Finishers als Wasserdampf eingespeist wird.

Die Menge des Schleppmittes beträgt in der Regel zwischen 1 und 7, vorzugsweise 2 bis 5 Gew.-% bezogen auf den Polyester am Ende der Stufe b). Höhere Mengen an Schleppmittel führen zu einer nicht akzeptablen Verschlechterung des im Finisher herrschenden Vakuums. Bei einer geringeren Schleppmitelkonzentration fällt die Abreicherung des Roh-Polyesters an cyclischen Verunreinigungen wie THF und cyclischen Monomeren, Dimeren, Trimeren und Tetrameren des Polyesters als zu gering aus.

Das Schleppmittel wird in den Gasraum des Finishers eingespeist. Das hat den Vorteil, das es zur Ausbildung eines homogenen Polyesterfilms im Finisher kommt und beispielsweise Blasenbildung oder Schaumbildung im Polyesterfilm vermieden werden.

Im Finisher bildet die Polymerschmelze in der Regel eine mittlere Schichtdicke (Film) von kleiner 5 mm, vorzugsweise kleiner 2 mm und insbesondere bevorzugt kleiner 1 mm auf.

In einer alternativen Ausführungsform des erfindungsgemäßen Verfahrens wird eine nach dem Polykondensator (Finisher) (B) zusätzliche Entgasungsanlage B' geschaltet (Sufe b'). Das Schleppmittel kann nun entweder in beide Entgasungsanlagen Finisher B und Entgasungsanlage B' oder ausschließlich in der Entgasungsanlage B' eingespeist werden.

In der Entgasungsanlage B' gelten ähnliche Bedingungen wie zuvor beschrieben, lediglich die Verweilzeiten in Entgasungsanlage B' sind mit 3 bis 40 Minuten kürzer als im Finisher B. der Roh-Polyester ist bereits polykondensiert, zu lange Verweilzeiten würden zu einem stärkeren Abbau des polykondensierten Roh-Polyesters führen.

Auch kann es von Vorteil sein, den Reaktionskatalysator durch Zugabe einmaliger oder weiterer Mengen der zuvor beschriebenen Deaktivatoren wie beispielsweise phosphorige Säure in seiner Aktivität zu reduzieren.

Die Temperaturen in der Entgasungsanlage B' können etwas niedriger als im Finisher gewählt werden und betragen in der Regel 180 bis 260°C und vorzugsweise 200 bis 240°C.

Das Schleppmittel wird in den Gasraum der Entgasungsanlage B' eingespeist. Das hat den Vorteil, das es zur Ausbildung eines homogenen Polyesterfilms in der Entgasungsanlage B' kommt und beispielsweise Blasenbildung oder Schaumbildung im Polyesterfilm vermeiden wird.

Als Schleppmittel geeignet ist Wasser, das in den Gasraum der Entgasungsanlage B' als Wasserdampf eingespeist wird.

Die Menge des Schleppmittes beträgt in der Regel zwischen 1 und 7, vorzugsweise 2 bis 5 Gew.-% bezogen auf den Polyester am Ende der Stufe b). Höhere Mengen an Schleppmittel führen zu einer nicht akzeptablen Verschlechterung des in der Entgasungsanlage B' herrschenden Vakuums. Bei einer geringeren Schleppmitelkonzentration fällt die Abreicherung des Roh-Polyesters an cyclischen Verunreinigungen wie THF und cyclischen Monomeren, Dimeren, Trimeren und Tetrameren des Polyesters als zu gering aus.

In der Entgasungsanlage B' bildet die Polymerschmelze in der Regel eine mittlere Schichtdicke (Film) von kleiner 5 mm, vorzugsweise kleiner 2 mm und insbesondere bevorzugt kleiner 1 mm auf.

Als Entgasungsanlage B' eignen sich hierbei die zuvor beschriebenen Scheibenreaktor und Käfigreaktor.

Besonders vorteilhaft als Entgasungsanlage B' ist ein Dünnschichtverdampfer geignet, wie er in den Beispielen näher beschrieben wird.

Schließlich geeignet als Entgasungsanlage B' ist ein Fallfilmverdampfer. Um Verweilzeiten von 3 bis 40 Minuten zu bewerkszelligen, wird in der Regel eine Kaskade aus 2 bis 100 Fallfilmverdampfern in Reihe geschaltet.

In der WO 2014/195176 ist ein Verfahren bei aromatischen und aliphatisch-aromatischen Polyestern beschrieben, deren Emmission an TOC (total organic carbon - wie beispielsweise THF) drastisch zu reduzieren. Wir haben gefunden, dass dies bei aliphatischen Polyestern wie PBS ebenfalls möglich ist, wenn vor Einspeisung in eine Entgasungsanlage B' der Roh-polyester mit 0,01 bis 2 Gew.-% des in WO 2014/195176 beschriebenen Acrylsäurepolymeren aufgebaut aus: a) 70 bis 100 Gew.-% Acrylsäure und b) 0 bis 30 Gew.-% mindestens eines anderen mit Acrylsäure copolymerisierbaren ethylenischen ungesättigten Monomeren, ausgewählt aus der Gruppe der monoethethylenisch ungesättigten Carbonsäuren, eingespeist wird.

Die mit dem erfindungsgemäßen Verfahren zugänglichen aliphatischen Polyester wie beispielsweise PBS kommen für zahlreiche Anwendungen wie Spritzguss-Produkte, Thermoform-Produkte, Filme oder Schäume in Frage. Dabei werden die aliphatischen Polyester häufig in Mischungen mit weiteren Biopolymeren wie Polymilchsäure, Polyhydroxyalkanoaten, biologischabbaubare aliphatisch-aromatischen Polyestern, Stärke, mineralischen Füllstoffen oder anderen Additiven wie beispielsweise Gleitmittel, Nukeierungsmitteln, Weichmachern oder Pigmenten eingesetzt.

Im erfindungsgemäßen Verfahren lassen sich die cyclischen Verunreinigungen deutlich abreichern. In der Regel läßt sich bei 1,4-Butandiol-haltigen Polyestern der Rest THF-Gehalt des aliphatischen Polyesters auf die Hälfte oder vorzugsweise auf ein Viertel und insbesondere bevorzugt auf ein Zehntel des ursprünglichen THF-Gehalts reduzieren. In der Regel weist der gereinigte aliphatische Polyester einen Rest-THF-Gehalt von kleiner 50 ppm , vorzugsweise kleiner 30 und insbesondere bevorzugt kleiner 10 ppm auf.

Auch der Gehalt an cyclischen Oligomeren des aliphatischen Polyesters läßt sich deutlich senken. Beim PBS beispielsweise wird durch das erfindungsgemäße Verfahren der Gehalt an cyclischem Monomer und cyclischem Dimer um in der Regel größer 30 %, vorzugsweise größer 40 % und insbesondere größer 50 % abgesenkt. Gerade diese beiden cyclischen Oligomere migrieren in einer aus dem aliphatschen Polyester hergestelltem Bauteil wie einem Film stärker als die entsprechend höheren Oligomere. Die störenden cyclischen Monomere und Dimere des PBS können auf im Allgemeinen unter 0,8 Gew.-% vorzugsweise unter 0,7 Gew.-% und insbesondere bevorzugt unter 0,6 Gew.-% des Polyesters reduziert werden. Durch die effiziente Abreicherung der cyclischen Monomeren und Dimeren im erfindungsgemäßen Verfahren kann eine Zulassung für den Lebensmittelkontakt nach EU 10/2011 erhalten werden.

Zur Herstellung dieser Polyestermischungen oder Polyesterformulierungen hat es sich als vorteilhaft erwiesen, wenn der an cyclischen Verunreinigungen abgereicherte aliphatische Polyester nach der Entgasungsanlage B oder B' oder optional nach der Kettenverlängerung - ohne Zwischenisolierung wie beispielsweise einer Unterwassergranulierung - kontinuierlich in die Compoundierung mit weiteren Polymeren und Hilfsstoffen eingespeist wird. Neben der Kosteneinsparung durch Weglassen des Granulierschritts muß der aliphatische Polyester nicht aufgeschmolzen werden. Die durch die thermische Belastung mögliche erneute Bildung von cyclischen Verunreinigungen kann somit unterbunden werden.

In der optionalen Kettenverlängerung (Stufe c) wird der polykondensierte Polyester zusammen mit 0,01 bis 4 Gew.-%, vorzugsweise 0,1 bis 2 Gew.-% und insbesondere bevorzugt 0,5 bis 1,2 Gew.-% bezogen auf den Polyester eines Kettenverlängerers in einen Extruder, einem kontinuierlichen Kneter (List-Reaktor) oder einem statischen Mischer eingespeist. Beispielhaft seien folgende Einbauten genannt: Beim statischer Mischer können SMR, SMX, SMXL-Elemente oder Kombinationen daraus z.B. von Fa. Sulzer Chemtech AG, Schweiz eingesetzt werden. Beispiele für einen List-Reaktor sind je nach Anwendungsfeld: ein einwelliger DISCOTHERM B oder zweiwellige CRP- und ORP-Reaktoren. Als Extruder kommen Ein- oder Zweiwellenextruder in Frage.

Als Kettenverlängerer kommen die zuvor beschriebenen Isocyanate oder Isocyanurate C1, Peroxide C2 und Epoxide C3a in Frage. Beispielsweise sind dies Diisocyanate ausgewählt aus der Gruppe bestehend aus Toluylen-2,4-diisocyanat, Toluylen-2,6-diisocyanat, 4,4'- und 2,4'-Diphenylmethan-diisocyanat, Naphthylen-1,5-diisocyanat, Xylylendiisocyanat, Hexamethylendiisocyanat, Isophorondiisocyanat und Methylen-bis (4-isocyanatocyclohexan). Besonders bevorzugt ist Hexamethylendiisocyanat.

Die Kettenverlängerung (Stufe c) erfolgt bei Reaktionstemperaturen von 220 bis 270°C, vorzugsweise 230 bis 250°C und bei Überdruck oder Normaldruck je nach verwendetem System. Es lassen sich bei Verweilzeiten von 2 bis 30 Minuten, vorzugsweise 4 bis 15 Minuten aliphatisch/aromatische Polyester mit einer Viskositäts-zahl nach DIN 53728 von 160 bis 250 cm³/g, und Säurezahlen nach DIN EN 12634 von vorzugsweise 0,5 bis 1,2 und insbesondere bevorzugt von 0,6 bis 1,0 mg KOH/g realisieren.

Der MVR (Schmelzevolumenrate) nach EN ISO 1133 (190°C, 2,16 kg Gewicht) nach Stufe c liegt im Allgemeinen bei 0,5 bis 6,0 cm³/10 min, bevorzugt bei 1,0 bis 5,0 und besonders bevorzugt bei 1,5 bis 3 cm³/10 min.

Der Reaktor, in dem die Kettenreaktion durchgeführt wird, hat die zuvor beschriebenen Einbauten, die für eine gute Durchmischung des Produktstroms sorgen.

Auf Grund des starken Viskositätsaufbaus bei der Kettenverlängerung kann es von Vorteil sein, die Kettenverlängerung im Reaktor nur soweit zu fahren bis der Kettenverlängerer zumindest mit einer funktionellen Einheit abreagiert hat. Die Vollendung des Kettenaufbaus kann beispielsweise in einem separaten Rührkessel oder in einem Rohr ohne Einbauten erfolgen. Auf diese Weise lassen sich Verstopfungen und Wandbelegungen vermeiden.

Die abreagierte Schmelze wird in der Regel über einen Schmelzefilter direkt in die Konfektionierung wie beispielsweise eine Unterwassergranulierung übergeführt.

Mit dem erfindungsgemäßen Verfahren lassen sich prozessfähig und effizient aliphatische Polyester herstellen, die zudem arm an cyclischen Verunreinigungen sind.

### Messmethoden:

Die Bestimmung der Viskositätszahl erfolgt nach DIN 53728 Teil 3, 3. Januar 1985. Als Lösungsmittel wurde das Gemisch: Phenol/Dichlorbenzol im Gewichtsverhältnis 50/50 verwendet.

Die Bestimmung der Schmelze-Volumenfließrate (MVR) erfolgte nach ISO 1133. Die Prüfbedingungen betrugen 190°C, 2,16 kg. Die Aufschmelzzeit betrug 4 Minuten. Der MVR gibt die Geschwindigkeit der Extrusion eines geschmolzenen Kunststoff-Formteils durch ein Extrusionswerkzeug von festgelegter Länge und festgelegtem Durchmesser unter den vorbeschriebenen Bedingungen: Temperatur, Belastung und Lage des Kolbens. Bestimmt wird das in einer festgelegten Zeit extrudierte Volumen im Zylinder eines Extrusionsplastometers.

### Anwendungstechnische Messungen:

Die Molekulargewichte Mn und Mw der teilaromatischen Polyester wurde gemäß DIN 55672-1 mittels SEC bestimmt: Elutionsmittel Hexafluoroisopropanol (HFIP) + 0,05 Gew.-% Trifluoroessigsäure-Ka-Salz; Die Kalibrierung erfolgte mit eng verteilten Polymethylmethacrylat-Standards.

Die Auswertung musste nach 18,83 mL (ca. M= 300 g/mol) abgebrochen werden, da für kleinere Molmassen das Chromatogramm durch Verunreinigungen der Probe, bzw. des SEC-Elutionsmittels, gestört wird.

### Schmelzvolumenrate MVR bei 190° C und 2.16 kg nach ISO 1133-1 DE

Die Oligomere wurden mittels Gaschromatographie gekoppelt mit Massenspektroskopie (GC-MS) charakterisiert. 24.41mg Probe wurde in 1.2ml Dichlormethan gelöst. Die Ampulle wurde 30 Minuten auf den Rollenmischer gelegt. Die Ionisation erfolgte durch positive Ionen, chemische Ionisation und Elektronenstoßionisation. Die Auflösung erfolgte über Einzelauflösung.

### Ausgangsstoffe

1,4-Butandiol der Fa. BASF SE, Bernsteinsäure der Fa. DSM N.V: und Titanorthotitanat von Sigma Aldrich.

### Polyester i:

### i-1 Polybutylensuccinat:

82,0 g 1,4-Butandiol, 82,7 g Bernsteinsäure, 0,09 g Glycerin und 0,13 g Titanorthotitanat wurden vorgelegt und bei 120 °C aufgeschmolzen. Anschließend wurde die Temperatur auf 160 °C erhöht und das gebildete Wasser abdestilliert. Danach wurde Vakuum angelegt und die Temperatur auf 250 °C erhöht und die Polykondensation bis zur gewünschten Viskositätszahl fertiggestellt. Der Polyester wies einen MVR von 145 g/10 min auf. Der Mw betrug zu Beginn der Entgasung 51700 Da und am Ende der Entgasung 40000 bis 45000 Da. Der Mn betrug zu Beginn 9000 Da und am Ende der Entgasung 7000 bis 10000 Da.

### Durchführung der Entgasung.

Die Entgasung wurde in einem Dünnschichtverdampfer durchgeführt. Generell wies der Dünnschichtverdampfer die folgenden Charikeristika auf: Als Verdampferfläche diente ein Rohr mit einem mechanischen Rührsystem in der Mitte. Die Schmelze wurde von oben auf die senkrecht stehende Verdampferfläche geleitet. Der Dünnschichtverdampfer erzeugte mit Hilfe eines Rotors mechanisch eine dünne Schicht (Schmelzeschicht) auf der Innenwand eines beheizten Außenmantels. Dabei kam es zu einer ständigen Oberflächenerneuerung, was einen guten Stoffaustausch und somit hohe Entgasungsleistung bedeutete. Die Entgasungsleistung wurde durch Zugabe eines Strippmittels (z.B. Wasser oder Wasserdampf) erreicht, das im Gegenstromprinzip zugeführt wurde. Weiterhin war für eine gute Entgasungsleistung ein Vakuum von kleiner/gleich 5 mbar notwendig.

Die Form und Anordnung der einzelnen Rotorblätter ermöglichte den Transport des viskosen Produktes zum Austrag des Prozessors. Dabei hing die Filmdicke und die Schmelzeförderung ebenfalls von der Geometrie der Rotorblätter ab. Das große freie Gasvolumen erlaubte ein hohes Eindampfverhältnis in einer Stufe ohne die Gefahr von Produktmitriss in das Kondensationssystem.

In den in Tabelle 1 beschriebenen Versuchen wurde ein Sambay-Verdampfer als Dünnschichtverdampfer wie oben beschrieben eingesetzt, wobei der Aussenmantel nicht aus Metall, sondern aus Glas war.

Der Polyester i-1 wurde als Schmelze von oben seitlich auf die senkrecht stehende Glasfläche/Verdampferfläche in die Anlage eingefüllt und aufgeschmolzen. Nach dem Aufschmelzen wurde der Polyester in die Anlage eingebracht und durch ein Rührwerk zu einem dünnen Film aufgespannt. Das Strippmittel wurde von unten im Gegenstrom zugegeben und dann Vakuum angelegt. Durch Anwendung der in Tabelle 1 angegebenen Temperatur, Vakuum und Strippmedium wurden die cyclischen Oligomere und weitere Nebenprodukte wie z. B. THF über Kopf abgezogen und im Kühler niedergeschlagen. Nach dem Versuch wurde der Polester und die ausgetragenen Stoffe mittels Gaschromatographie analysiert.

**Tabelle 1**

| **Beispiel** | | **V1** | **2** | **V3** | **V4** | **V5** |
|---|---|---|---|---|---|---|
| | Einheit | | | | | |
| Temperatur (Aufschmelzen) | °C | 190 | 190 | 190 | 190 | 190 |
| Temperatur (Entgasung) | °C | 250 | 250 | 250 | 250 | 250 |
| Temperatur (Wasserdampf) | °C | 100 | 100 | 100 | 100 | 100 |
| Länge Entgasung | cm | 30 | 30 | 30 | 30 | 30 |
| Mittlere Verweilzeit | min | 30 | 30 | 30 | 30 | 30 |
| Filmdicke | mm | 1 | 1 | 1 | 1 | 1 |
| Vakuum | mbar | 6,5 | 3 | 1,5 | - | - |
| Strippmedium | | H₂O (d) | H₂O (d) | - | H₂O (d) | - |
| Menge | | 2 wt-% | 2 wt-% | - | 2 wt-% | - |
| Drehzahl | rpm | 350 | 350 | 350 | 350 | 350 |
| Oligomeranteil | | | | | | |
| Start | | | | | | |
| <500 Da | wt-% | 0,8 | 0,8 | 0,8 | 0,8 | 0,7 |
| <1000 Da | wt-% | 1,7 | 1,7 | 1,7 | 1,8 | 1,8 |
| Ende | | | | | | |
| <500 Da | wt-% | 0,8 | 0,5 | 1,2 | 0,8 | 0,8 |
| <1000 Da | wt-% | 17 | 1,4 | 3,1 | 2,0 | 2,0 |
| Oligomer in Kühlung | | Spuren | ja | nein | nein | nein |
| THF | | | | | | |
| Start | ppm | | 110 | 110 | | |
| Ende | ppm | | 30 | 130 | | |

### Vergleichsversuch Extraktion:

Polyestergranulat 1-i wurde vorgelegt und mit einer Mischung aus Ethanol und Wasser (70wt-%/30wt%) bei 70 °C gerührt. Alle zwei Stunden wurde das Extraktionsmittel erneuert. Nach acht Stunden wurde das Granulat von dem Ethanol-Wasser-Gemisch getrennt und getrocknet, die extrahierten Oligomere wurden analysiert (siehe Tabelle 2).

**Tabelle 2**

| Cyclische Oligomere | erfindungsgemäß (im Destillat) | Vergleichsversuch (im Extrakt) |
|---|---|---|
| n₁ | 10% | 5% |
| n₂ | 90% | 55% |
| n₃ | <1% | 35% |
| n₄ | <1% | 5% |
| n₅ | <1% | <1 |

Der nach dem erfindungsgemäßen Verfahren hergestellten Polyester (Beispiel 2) wies niedrigere Gehalte an cyclischem Monomer und Dimer auf als der durch Extraktion gereinigten Polyester. Daraus hergestellte Folien zeigten ein besseres Migrationsverhalten als Folien, die aus extrahiertem Polyester hergestellt worden waren.

## Patentansprüche

1. Kontinuierliches Verfahren zur Herstellung eines aliphatischen Polyesters, aufgebaut aus:
i-a) 90 bis 100 mol %, bezogen auf die Komponenten i-a bis i-b, Bernsteinsäure;
i-b) 0 bis 10 mol %, bezogen auf die Komponenten i-a bis i-b, einer oder mehrerer C₆-C₂₀ Dicarbonsäuren und insbesondere bevorzugt Adipinsäure, Azelainsäure, Sebazinsäure oder Brassylsäure;
i-c) 99 bis 100 mol %, bezogen auf die Komponenten i-a bis i-b, 1,3 Propandiol oder insbesondere bevorzugt 1,4-Butandiol;
i-d) 0 bis 1 Gew.- %, bezogen auf die Komponenten i-a bis i-c eines Kettenverlängerers und/oder Verzweigers;
umfassend die Stufen a) Veresterung, b) Polykondensation und gegebenenfalls c) Kettenverlängerung, **dadurch gekennzeichnet, dass** der Roh-Polyester während der Stufe b), in der der Polykondensator als Entgasungsanlage (B) fungiert und/oder b') nach der Polykondensation in einer zusätzlichen Entgasungsanlage (B' ), in Gegenwart von 1 bis 7 Gew.-%, bezogen auf das Gesamtgewicht des Roh-Polyesters, in den Gasraum der Entgasungsanlage B und/oder B' eingespeisten Wasser als Schleppmittel bei einem Druck von 0,01 bis 5 mbar entgast wird.

2. Verfahren nach Anspruch 1, **dadurch gekennzeichnet, dass** in Stufe b - während der Polykondensation - bei einer mittleren Verweilzeit von 30 bis 90 Minuten entgast wird.

3. Verfahren nach Anspruch 1, **dadurch gekennzeichnet, dass** in Stufe b' - nach der Polykondensation - bei einer mittleren Verweilzeit von 3 bis 40 Minuten entgast wird.

4. Verfahren nach einem der Ansprüche 1 bis 3, **dadurch gekennzeichnet, dass** die Entgasungsanlage eine Innentemperatur von 180 bis 260°C und bevorzugt 200 °C bis 240°C aufweist.

5. Verfahren nach einem der Ansprüche 1 bis 4, **dadurch gekennzeichnet, dass** der Roh-Polyester in der Entgasungsanlage eine Schichtdicke von kleiner 2 mm und bevorzugt kleiner 1 mm aufweist.

6. Verfahren nach einem der Ansprüche 1 bis 5, **dadurch gekennzeichnet, dass** der aliphatische Polyester das aliphatische Diol 1,4-Butandiol enthält.

7. Verfahren nach einem der Ansprüche 1 bis 5, **dadurch gekennzeichnet, dass** der aliphatische Polyester Polybutylensuccinat ist.

8. Verfahren nach einem der Ansprüche 1 bis 7, **dadurch gekennzeichnet, dass** der Roh-Polyester einen MVR nach DIN EN 1133-1 vom 01.03.2012 (190°C, 2,16 kg) von 10 bis 150 cm³/10 min aufweist.

9. Verfahren nach einem der Ansprüche 1 bis 8, **dadurch gekennzeichnet, dass** die Entgasungsanlage B' ein Dünnschichtverdampfer ist.

10. Verfahren nach einem der Ansprüche 1 bis 8, **dadurch gekennzeichnet, dass** die Entgasungsanlage B und /oder B' ein Scheiben- oder Käfigreaktor ist

11. Verfahren nach einem der Ansprüche 1 bis 8, **dadurch gekennzeichnet, dass** die Entgasungsanlage B' ein Kneter oder eine Planetwalzenextruder ist.

12. Verfahren nach einem der Ansprüche 1 bis 8, **dadurch gekennzeichnet, dass** die Entgasungsanlage B' eine Kaskade aus 2 bis 100 Fallfilmverdampfern ist.

13. Verfahren nach einem der Ansprüche 1 bis 12, **dadurch gekennzeichnet, dass** der Roh-polyester mit 0,01 bis 2 Gew.-% eines Acrylsäurepolymers, aufgebaut aus a) 70 bis 100 Gew.-% Acrylsäure und b) 0 bis 30 Gew.-% mindestens eines anderen mit Acrylsäure copolymerisierbaren ethylenischen ungesättigten Monomeren, ausgewählt aus der Gruppe der monoethethylenisch ungesättigten Carbonsäuren, gemischt wird bevor er in die Entgasungsanlage B' eingespeist wird.

14. Verfahren nach einem der Ansprüche 1 bis 13, **dadurch gekennzeichnet, dass** der aus der Entgasungsanlage B und/oder B' gereinigte Polyester ohne Granulierungsschritt in die Compoundierung mit weiteren Polymeren und Hilfsstoffen eingespeist wird.

## Claims

1. A continuous process for producing an aliphatic polyester constructed from:
i-a) 90 to 100 mol% based on the components i-a to
i-b of succinic acid;
i-b) 0 to 10 mol% based on the components i-a to i-b of one or more C₆-C₂₀ dicarboxylic acids and especially preferably adipic acid, azelaic acid, sebacic acid or brassylic acid;
i-c) 99 to 100 mol% based on the components i-a to i-b of 1,3-propanediol or especially preferably 1,4-butanediol;
i-d) 0% to 1% by weight based on the components i-a to i-c of a chain extender and/or branching agent;
comprising the steps of a) esterification, b) polycondensation and optionally c) chain extension, wherein during step b) in which the polycondenser functions as a degassing apparatus (B) and/or b') after the polycondensation in an additional degassing apparatus (B') the crude polyester is degassed at a pressure of 0.01 to 5 mbar in the presence of 1% to 7% by weight, based on the total weight of the crude polyester, of water, introduced into the gas space of the degassing apparatus B and/or B' as an entraining agent.

2. The process according to claim 1, wherein in step b - during the polycondensation - degassing is performed with an average residence time of 30 to 90 minutes.

3. The process according to claim 1, wherein in step b' - after the polycondensation - degassing is performed with an average residence time of 3 to 40 minutes.

4. The process according to any of claims 1 to 3, wherein the degassing apparatus has an internal temperature of 180°C to 260°C and preferably 200°C to 240°C.

5. The process according to any of claims 1 to 4, wherein the crude polyester in the degassing apparatus has a film thickness of less than 2 mm and preferably less than 1 mm.

6. The process according to any of claims 1 to 5, wherein the aliphatic polyester comprises the aliphatic diol 1,4-butanediol.

7. The process according to any of claims 1 to 5, wherein the aliphatic polyester is polybutylene succinate.

8. The process according to any of claims 1 to 7, wherein the crude polyester has an MVR according to DIN EN 1133-1 of 01.03.2012 (190°C, 2.16 kg) of 10 to 150 cm³/10 min.

9. The process according to any of claims 1 to 8, wherein the degassing apparatus B' is a thin film evaporator.

10. The process according to any of claims 1 to 8, wherein the degassing apparatus B and/or B' is a spinning-disc reactor or cage reactor.

11. The process according to any of claims 1 to 8, wherein the degassing apparatus B' is a kneader or a planetary roll extruder.

12. The process according to any of claims 1 to 8, wherein the degassing apparatus B' is a cascade of 2 to 100 falling film evaporators.

13. The process according to any of claims 1 to 12, wherein before introduction into the degassing apparatus B' the crude polyester is mixed with 0.01% to 2% by weight of an acrylic acid polymer constructed from: a) 70% to 100% by weight of acrylic acid and b) 0% to 30% by weight of at least one other ethylenically unsaturated monomer copolymerizable with acrylic acid and selected from the group of monoethylenically unsaturated carboxylic acids.

14. The process according to any of claims 1 to 13, wherein the polyester purified from the degassing plant B and/or B' is sent for compounding with further polymers and auxiliaries without a granulation step.

## Revendications

1. Procédé continu pour la préparation d'un polyester aliphatique, constitué par :
i-a) 90 à 100% en mole, par rapport aux composants i-a à i-b, d'acide succinique ;
i-b) 0 à 10% en mole, par rapport aux composants i-a à i-b, d'un ou de plusieurs acides dicarboxyliques en C₆-C₂₀ et en particulier de préférence d'acide adipique, d'acide azélaïque, d'acide sébacique ou d'acide brassylique ;
i-c) 99 à 100% en mole, par rapport aux composants i-a à i-b, de 1,3-propanediol ou en particulier de préférence de 1,4-butanediol ;
i-d) 0 à 1% en poids, par rapport aux composants i-a à i-c, d'un agent d'allongement de chaîne et/ou de ramification ;
comprenant les étapes a) estérification, b) polycondensation et le cas échéant c) allongement de chaîne, **caractérisé en ce que** le polyester brut est dégazé, pendant l'étape b), dans laquelle le polycondensateur fonctionne comme installation de dégazage (B), et/ou b'), après la polycondensation dans une installation de dégazage supplémentaire (B'), en présence de 1 à 7% en poids, par rapport au poids total du polyester brut, d'eau injectée dans l'espace gazeux de l'installation de dégazage B) et/ou B' en tant qu'agent d'entraînement, à une pression de 0,01 à 5 mbars.

2. Procédé selon la revendication 1, **caractérisé en ce que** le dégazage a lieu dans l'étape b - pendant la polycondensation - à un temps de séjour moyen de 30 à 90 minutes.

3. Procédé selon la revendication 1, **caractérisé en ce que** le dégazage a lieu dans l'étape b' - après la polycondensation - à un temps de séjour moyen de 3 à 40 minutes.

4. Procédé selon l'une quelconque des revendications 1 à 3, **caractérisé en ce que** l'installation de dégazage présente une température interne de 180 à 260°C et de préférence de 200°C à 240°C.

5. Procédé selon l'une quelconque des revendications 1 à 4, **caractérisé en ce que** le polyester brut présente, dans l'installation de dégazage, une épaisseur de couche inférieure à 2 mm et de préférence inférieure à 1 mm.

6. Procédé selon l'une quelconque des revendications 1 à 5, **caractérisé en ce que** le polyester aliphatique contient le diol aliphatique 1,4-butanediol.

7. Procédé selon l'une quelconque des revendications 1 à 5, **caractérisé en ce que** le polyester aliphatique est le poly(succinate de butylène).

8. Procédé selon l'une quelconque des revendications 1 à 7, **caractérisé en ce que** le polyester brut présente un indice de fluidité à chaud en volume (MVR) selon la norme DIN EN 1133-1 du 01.03.2012 (190°C, 2,16 kg) de 10 à 150 cm³/10 min.

9. Procédé selon l'une quelconque des revendications 1 à 8, **caractérisé en ce que** l'installation de dégazage B' est un évaporateur en couche mince.

10. Procédé selon l'une quelconque des revendications 1 à 8, **caractérisé en ce que** l'installation de dégazage B et/ou B' est un réacteur à disque ou à cage.

11. Procédé selon l'une quelconque des revendications 1 à 8, **caractérisé en ce que** l'installation de dégazage B' est un malaxeur ou une extrudeuse à vis planétaires.

12. Procédé selon l'une quelconque des revendications 1 à 8, **caractérisé en ce que** l'installation de dégazage B' est une cascade de 2 à 100 évaporateurs à film tombant.

13. Procédé selon l'une quelconque des revendications 1 à 12, **caractérisé en ce que** le polyester brut est mélangé avec 0,01 à 2% en poids d'un polymère d'acide acrylique, formé à partir de a) 70 à 100% en poids d'acide acrylique et b) 0 à 30% en poids d'au moins un autre monomère éthyléniquement insaturé, copolymérisable avec l'acide acrylique, choisi parmi les acides carboxyliques éthyléniquement mono-insaturés, avant d'être injecté dans l'installation de dégazage B'.

14. Procédé selon l'une quelconque des revendications 1 à 13, **caractérisé en ce que** le polyester purifié provenant de l'installation de dégazage B et/ou B' est injecté sans étape de granulation dans le mélange avec d'autres polymères et adjuvants.
